# FASCICULE DE BREVET EUROPEEN

(11) **EP 2 199 343 B1**
(45) Date de publication et mention de la délivrance du brevet: **10.04.2013**
(21) Numéro de dépôt: 09015020.2
(22) Date de dépôt: 04.12.2009
(51) Int. Cl.: C08L 71/02, C08L 75/04, C08L 75/08, C09J 175/04, C09J 175/08, C09J 171/02, C09J 183/06, C09J 5/00, C08K 3/36, C08L 83/04, C08L 33/06, C09J 133/06, C08G 18/48, C08G 18/71, C08G 18/75, C08G 65/336, C09J 143/04

(54) **Composition adhésive pelable après réticulation**
Klebezusammensetzung, die nach Vernetzung abziehbar ist
Adhesive composition which can be peeled off after cross-linking

(30) Priorité: 18.12.2008 FR 0807125
(43) Date de publication de la demande: 23.06.2010
(73) Titulaire: Bostik SA, 92400 Courbevoie (FR)
(72) Inventeur: Cagan, Virginie, 77140 Moncourt Fromonville (FR); Blachere, Karen, 77350 Le Mee Sur Seine (FR); Mas, Patrick Michel, 94100 Saint Maur Des Fosses (FR); Herblot, Fabrice, 77000 Melun (FR)
(74) Mandataire: Granet, Pierre

(56) Documents cités:
- WO-A1-2007/131912
- US-A1- 2004 180 155
- US-A1- 2004 181 007
- US-A1- 2005 101 753
- US-A1- 2008 017 296
- US-A1- 2008 245 476
- US-B1- 6 310 170
- ANONYME: "Dynasylan 6490" , [Online] 31 décembre 2007 (2007-12-31), pages 1-3, XP002535134 Extrait de l'Internet: URL:http://www.falcone.ch/shopfalcone/osc/ documents/DS%206490.pdf?osCsid=f5dcf5a6880 2c61d1f52e0df29ee65dd> [extrait le 2009-07-02]

## Description

La présente invention a pour objet une composition adhesive et un procédé la mettant en oeuvre, notamment par les consommateurs, pour la fixation de divers objets, par exemple à des fins d'aménagement ou de décoration des habitations.

Les colles (également appelées adhésifs ou encore mastics) de fixation sont couramment utilisées par les particuliers dans leurs travaux d'intérieurs pour fixer les objets les plus divers sur les sols, murs ou plafonds et éviter ainsi le recours aux systèmes mécaniques de fixation traditionnels à base par exemple de clous, vis et/ou chevilles. Les mastics de fixation couramment disponibles de nos jours permettent ainsi de fixer, par exemple sur une paroi verticale, des objets de poids très important correspondant à application sur le joint de collage (ou joint adhésif) de contraintes de cisaillement de l'ordre de 15 kg/cm² 100 kg/cm². La nature du substrat sur lequel l'objet peut être fixé est elle-même très variée ; on peut citer notamment les carreaux de plâtre ou de céramique, le béton, le fibrociment, ou encore le bois.

Il est ainsi possible d'envisager la fixation par collage d'objets tels que, par exemple, des spots pour éclairage, des crochets, des miroirs, des patères ou porte-manteaux de formes diverses, des supports pour tringle à rideau et même des supports pour étagères destinées au rangement de vaisselle, ustensiles de cuisine ou livres.

La solidité de l'assemblage ainsi réalisé résulte de l'excellente cohésion du joint adhésif d'environ 0,1 à 2 millimètres d'épaisseur par l'intermédiaire duquel l'objet est fixé au substrat. La solidité de l'assemblage est également la conséquence de la qualité de l'adhésion entre les 2 faces dudit joint et, respectivement, objet et le substrat.

La solidité de l'assemblage obtenu par la fixation de ces objets sur les divers substrats pose toutefois la question de leur séparation au consommateur, notamment lorsque ce dernier désire procéder à un réaménagement de son intérieur, ou encore en cas de changement d'occupant du local d'habitation. Il existe ainsi un risque sérieux soit que le particulier ne puisse décoller l'objet fixé au substrat, soit que la séparation réalisée en force ne conduise à endommager l'objet et/ou le substrat concernés.

La demande de brevet US 2006/0178470 décrit une composition convenant à une utilisation comme colle de fixation, qui comprend moins de 15 % en poids d'un polyuréthanne à groupe silyl et de 20 à 95 % en poids d'une charge. Cette colle offre une bonne capacité à la séparation entre l'objet collé et le substrat, également qualifiée de comportement adhésif réversible ; cette séparation s'effectue par une découpe pratiquée dans la masse du joint adhésif au moyen d'un outil coupant approprié tel qu'une spatule, un racloir ou encore un fil métallique. Cette séparation s'accompagne toutefois de la présence de résidus provenant du joint adhésif qui sont solidement fixés tant sur l'objet séparé que sur le substrat, et dont l'élimination nécessite un difficile travail de raclage à la spatule, qui peut s'avérer pratiquement impossible dans le cas de substrats rugueux comme le bois, le béton ou le fibrociment.

La présente invention a pour but de remédier à cet inconvénient.

Un autre but de la présente invention est de proposer une colle convenant à la fixation d'objets contre une paroi verticale telle qu'un mur, qui offre une résistance au cisaillement du joint adhésif correspondant de 3 à 20 kg/cm².

Un autre but de la présente invention est de proposer une colle convenant à la fixation d'objets au plafond, qui offre une résistance à la traction du joint adhésif correspondant à une valeur de 5 à 30 kg/cm² lorsque ledit joint est compris entre 2 supports rigides en bois.

Un autre but de la présente invention est de proposer une colle convenant à la fixation d'objets sur divers substrats et telle que le joint adhésif solidarisant objet avec le substrat puisse être commodément soumis à une rupture qui se situe essentiellement au niveau de son interface avec ledit objet ou ledit substrat, une telle rupture étant qualifiée de "rupture adhésive".

Un autre but de la présente invention est de proposer une colle convenant à la fixation d'objets sur divers substrats et telle que l'objet après fixation puisse être séparé du substrat sans détériorer tant ce dernier que ledit objet.

Il a à présent été trouvé que ces buts peuvent être atteints en totalité ou en partie au moyen de la composition adhésive et du procédé la mettant en oeuvre décrits ci-après.

La présente invention a tout d'abord pour objet une composition adhésive comprenant:
- de 58 à 80 % d'un polymère (A) à radical terminal alkoxysilane réticulable à l'humidité ;
- de 8 à 20 % d'une silice (B) ayant une surface spécifique BET comprise entre 150 et 250 m²/g;
- de 4 à 15 % d'un oligomère (C) de masse molaire comprise entre 500 et 5000 Da et susceptible d'être obtenu par oligomérisation d'un dérivé vinylique d'un alkoxy alkyl silane ; et
- de 0,01 à 3 % d'un catalyseur de réticulation (D).

La chaîne principale du polymère (A) peut être choisie parmi les chaînes polymériques suivantes :
- (A1) les polyoxyalkylenes (ou polyéthers) de masse molaire comprise entre 500 et 30 000 Da, de préférence entre 3000 et 15 000 Da, et notamment les polyexyéthylènes et polyoxypropylènes ;
- (A2) les polyuréthanes de masse molaire comprise entre 600 Da et 60 kDa, de préférence entre 1000 et 30 000 Da, et obtenus par condensation d'un polyol (notamment de type polyether et/ou polyester) avec des polyisocyanates ;
- (A3) les homopolymères et copolymères de masse molaire comprise entre 5 et 100 kDa, obtenus à partir :
   - d'au moins un monomère de type alkyl (méth)acrylate comprenant un radical alkyle ayant un nombre d'atomes de carbone compris entre 1 et 15, de préférence entre 1 et 10 ; et éventuellement
   - d'autres monomères, comme les dérivés styréniques, les éthers vinyliques, les acides (meth)acryliques ou d'autres dérivés polyinsaturés, ces autres monomères pouvant être utilisés jusqu'à des teneurs de 50% en poids par rapport à l'ensemble des monomères. Ces autres monomères sont par exemple tels que ceux décrits dans le brevet US 4,593,068.

La composition adhésive selon l'invention convient particulièrement à une utilisation comme colle de fixation. De plus, après son application pour la fixation d'un objet sur un substrat, ledit objet peut être commodément séparé dudit substrat au moyen d'une rupture adhésive. Le comportement correspondant du joint adhésif solidarisant l'objet et le substrat est aussi qualifié de "pelable". La pelabilité du joint adhésif obtenue par l'utilisation comme colle de fixation de la composition adhésive selon l'invention, permet avantageusement de séparer l'objet fixé du substrat sans laisser de résidus attachés à la surface de l'objet et/ou du substrat.

Le radical terminal alkoxysilane a pour formule (I) :

-Si (R¹)ₚ(OR²)₃₋ₚ

dans laquelle :
- R¹ et R², identiques ou différents, représentent chacun un radical alkyle linéaire ou ramifié de 1 à 4 atomes de carbone, avec la possibilité lorsqu'il y a plusieurs radicaux R¹ (ou R²) que ceux-ci soient identiques ou différents;
- p est un nombre entier égal à 0, 1 ou 2.

Le radical alkoxysilane peut être relié à la chaîne principale du polymère (A) directement par sa liaison disponible ou indirectement, notamment par l'intermédiaire d'un radical hydrocarboné divalent, de préférence par un radical alkylène comme par exemple le radical de formule : CH₂-CH₂-CH₂-.

De préférence, le radical alkoxysilane est choisi parmi les radicaux de formule suivante :

-Si(OCH₃)₃, -Si(CH₃)(OCH₃)₂, -Si(OCH₂CH₃)₃, -Si(CH₃)(OCH₂CH₃)₂.

Les polymères (A) sont préparés selon des procédés connus en soi et par exemple exposés par la demande US 2006/0178470 déjà citée. Les polymères ayant pour chaîne principale (A3) peuvent être préparés selon des procédés décrits dans les demandes de brevet EP 1657155 ou EP 1371670. Plusieurs de ces polymères (A) sont couramment disponibles dans le commerce.

Ainsi, les polyéthers à radical terminal alkoxysilane sont disponibles auprès de la société Kancka, comme par exemple la produit S303H

Parmi les polymères A dont la chaîne principale est un polyuréthane, on peut notamment citer un polyuréthane comprenant 2 groupes terminaux de type alkoxysilane et ayant pour formule (II), laquelle, pour la clarté de la présentation, est découpée de gauche à droite en les 3 groupes suivants, reliés l'un à l'autre par une liaison simple : 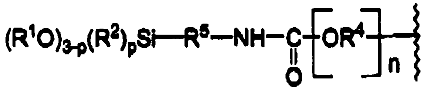 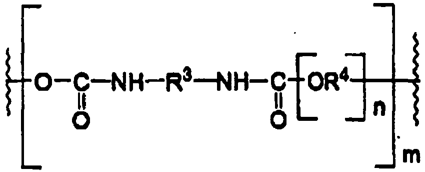 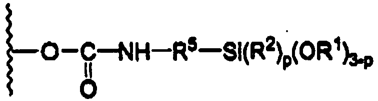 dans laquelle :
- R¹ et R² sont tels que définis précédemment;
- R³ représente un radical divalent hydrocarboné comprenant de 5 à 15 atomes de carbone qui peut être aromatique ou aliphatique, linéaire, ramifié ou cyclique ;
- R⁴ représente un radical divalent alkylene linéaire ou ramifié comprenant de 1 à 4 atomes de carbone ;
- R⁵ représente un radical divalent alkylène linéaire comprenant de 1 à 3 atomes de carbone ;
- n est un nombre entier tel que la masse molaire du bloc polyéther de formule -[OR⁴]ₙ- est comprise entre 300 Da et 30 kDa;
- m est un nombre entier tel que la masse molaire du polymère de formule (II) est comprise entre 600 Da et 60 kDa ;
- p est tel que défini précédemment.

Dans le présent texte et en l'absence d'indication contraire :
- les quantités exprimées sous la forme de pourcentage correspondent à des pourcentages poids/poids ;
- les radicaux R¹ à R⁵ ainsi que les entiers n, m et p conservent dans les différentes formules chimiques la même signification que celle définie ci-dessus ;
- les masses molaires qui sont indiquées pour les polymères, blocs de polymères ou oligomères sont des masses molaires moyennes en nombre, exprimées en dalton (Da). Elles sont déterminées par chromatographie par perméation de gel, la colonne étant calibrée avec des étalons de PolyEthylène Glycol (PEG).

Le polymère de formule (II) peut être obtenu selon le procédé suivant.

Dans une première étape, on prépare un polyuréthane comprenant 2 groupes terminaux hydroxyles et ayant pour formule (III) : 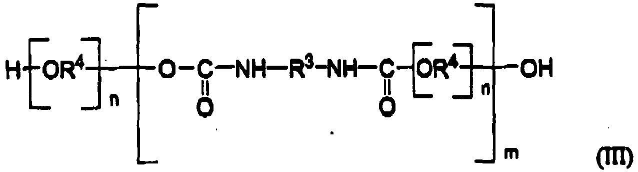 en faisant réagir une mole de diisocyanate de formule (IV) :

NCO-R³-NCO (IV)

avec environ deux moles d'un polyéther diol de formule (V) :

H-[OR⁴]ₙ-OH (V)

ce qui correspond à un rapport des nombres de fonctions NCO/OH égal à environ 0,5.

La réaction s'effectue à une température comprise entre 60 et 90 °C, durant un temps d'environ 2 à 8 heures, et éventuellement en présence d'un catalyseur.

Le polyuréthane de formule (III) est dans une seconde étape converti en polyuréthane de formule (II) par une réaction de silylation avec un isocyanatosilane de formule (VI) :

NCO-R⁵-Si(R²)ₚ(OR¹)₃₋ₚ (VI)

à raison d'environ une mole de polyuréthane de formule (III) pour 2 moles du composé de formule (VI).

Les polyéthers diols de formule (V) sont largement disponibles dans le commerce, et les isocyanatosilanes de formule (VI) le sont également. On peut citer à titre d'exemple le gamma-isocyanato-n-propyl-triméthoxysilane qui est disponible sous la dénomination Geniosil^{®} GF 40 ou encore le alpha-isocyanato-n-méthyl- méthyldiméthoxysilane qui est disponible sous la dénomination commerciale Geniosil^{®} XL 42, tous deux auprès de la société Wackcr.

Ces 2 étapes de synthèses sont conduites dans des conditions anhydres, de manière à éviter l'hydrolyse des groupes alkoxysilanes. Un domaine de température typique pour la mise en oeuvre de ces réactions est de 30° à 120°C, et plus particulièrement de 60 à 90°C. Une légère variation par rapport aux stoechiométries données précédemment peut être envisagée sans inconvénient, à condition toutefois de ne pas dépasser 10 % dans la première étape (synthèse du polyuréthane de formule III) et 2% dans la seconde étape (synthèse du polyuréthane de formule II).

Il est fait référence au brevet européen EP 0 931 800 pour plus de détails concernant la préparation du polyuréthane A de formule (II) à groupes terminaux de type alkoxysilane.

La silice (B) mise en oeuvre dans la composition adhésive selon l'invention est généralement obtenue par pyrogénation et est largement disponible dans le commerce. On utilise par exemple une silice pyrogénée qui est commercialisée par la société WACKER, avec une surface spécifique comprise entre 150 et 200 m²/g.

L'oligomère (C) mis en oeuvre dans la composition adhésive selon l'invention est préparé selon des procédés connus et est largement disponible dans le commerce. On peut notamment citer le DYNASYLAN^{®} 6490 qui est un oligomère do vinyltriméthoxysilane commercialisé par la socété Degussa, ayant pour masse molaire environ 900 Da.

Le catalyseur de réticulation (D) utilisable dans la composition selon l'invention peut être tout catalyseur connu par l'homme du métier pour la condensation de silanol. On peut citer comme exemples de tels catalyseurs des composés organométalliques à base de fer ou d'étain divalent ou tétravalent. De tels composés sont disponibles dans le commerce, par exemple auprès de la société EVONIK comme le TEGOKAT^{®} 223 qui est un catalyseur à base de dioctylétain.

Selon une variante préférée de la composition adhésive selon l'invention, celle-ci comprend de 60 à 77 % de polymère (A), de 10 à 18 % de silice pyrogénée (B), de 5 à 12 % de l'oligomère (C), et de 0,1 à 2 % de catalyseur (D).

La composition adhésive selon l'invention peut comprendre en outre divers additifs tels que des stabilisants UV, des promoteurs d'adhérence, des agents épaississants et dessicants, diverses charges minérales comme le carbonate de calcium.

Selon une variante préférée, la composition selon l'invention comprend jusqu'à 3 % d'un dérivé alkoxysilane hydrolysable, en tant qu'agent dessicant, et de préférence un dérive de triméthoxysilane, Un tel agent prolonge avantageusement la durée de conservation de la composition selon l'invention durant le stockage et le transport, avant son utilisation. On peut citer par exemple le vinyltriméthoxysitane disponible sous la dénomination commerciale DYNASYLAN^{®} VTMO auprès de la société Degussa.

Selon une variante plus particulièrement préférée de la composition selon l'invention, celle-ci comprend en outre de 0,1 à 5 % de granulats de caoutchouc de forme non sphérique ayant une taille comprise entre 0,5 et 2 mm, de préférence entre 0,8 et 1,2 mm. Ces granulats sont avantageusement fabriqués par broyage de pneumatiques recyclés et sont disponibles dans le commerce.

La composition adhésive selon l'invention peut être préparée par simple mélange à température ambiante de ses ingrédients.

L'invention concerne également un procédé de fixation d'un objet sur un substrat compris dans les sols, parois verticales et/ou plafonds des habitations, comprenant :
i) le dépôt de la composition adhésive telle que définie précédemment, sous la forme d'un cordon ayant un diamètre de 2 à 10 mm, de préférence de 4 à 10 mm, sur les surfaces de l'objet ou du substrat destinées à être en contact,
ii) l'application par simple pression manuelle de l'objet sur le substrat, puis
iii) la réticulation de ladite composition adhésive sous l'effet de l'humidité atmosphérique durant un temps compris entre 1 heure et 48 heures, de préférence entre 4 heures et 24 heures.

En vue de sa mise en oeuvre dans ce procédé, la composition adhésive est généralement conditionnée à l'abri de l'air dans un container fermé (ou cartouche) muni d'une canule (ou buse), dans lequel elle est acheminée jusqu'à l'utilisateur final. Au moment de son utilisation, par exemple par le consommateur, la cartouche est placée dans un pistolet qui permet d'extruder la composition adhésive à travers la buse, sous la forme d'un cordon dont le diamètre est défini par le diamètre de la buse, généralement compris entre 2 et 10 mm.

On préfère la mise en oeuvre de ce procédé pour la fixation d'objets sur un substrat compris dans une paroi verticale, comme par exemple un mur ou une cloison.

On préfère également déposer le cordon de composition adhésive sur la surface plane de l'objet destinée à être mise en contact avec le substrat.

Le procédé selon l'invention permet avantageusement la fixation d'objets dont le poids correspond à une contrainte de cisaillement exercée sur le joint constitué de la composition adhésive réticulée, allant de 3 à 20 kg/cm².

Parmi les objets qui peuvent être fixés par le procédé selon l'invention, on peut citer des objets utilisables à des fins d'aménagement ou de décoration des habitations, comme par exemple des spots pour éclairage, des crochets, des miroirs, des patères ou porte-manteaux de formes diverses, des supports pour tringle à rideau et des supports pour étagères destinées au rangement de vaisselle, ustensiles de cuisine ou livres.

Les substrats sur lesquels un objet peut être fixé sont très variés et comprennent notamment les carreaux de plâtre (éventuellement revêtus ou non d'une couche de peinture ou d'un revêtement de papier), les carreaux de céramique, le béton, le fibrociment, le bois, les panneaux de particules de bois compressées, éventuellement contrecollés avec un revêtement synthétique, ou encore des panneaux rigides en matières plastiques telle que le polychlorure de vinyle ou le polyméthacrylate de méthyle.

La quantité de composition adhésive à déposer varie selon la taille et le poids de l'objet à fixer et peut couvrir de 10 à 70 % de la surface de l'objet à encoller, de préférence de 20 à 40%.

Dans le cas d'un objet à fixer sur un substrat compris dans une paroi verticale, le cordon de composition adhésive est de préférence placé sur la moitié supérieure de la surface plane de l'objet destinée à être au contact du substrat, au voisinage de la ligne de contact entre ladite surface et le substrat.

L'invention concerne enfin un procédé de séparation de l'objet fixé à un substrat conformément au procédé défini précédemment, comprenant la mise en oeuvre d'une rupture adhésive.

A la différence de la rupture cohésive décrite par la demande de brevet US 2006/0178470, une rupture adhésive a pour effet de désolidariser l'objet du substrat au niveau de l'interface du joint adhésif de colle réticulée avec l'objet ou le substrat. La possibilité d'obtenir une telle rupture, conformément à ce procédé et grâce à la composition adhésive mise en oeuvre, permet avantageusement d'éviter la présence de résidus de colle réticulée provenant du joint adhésif et demeurant fixés à la surface de l'objet et/ou du substrat après leur séparation.

Sur un plan pratique, une rupture adhésive permettant de séparer objet du substrat peut être amorcée en introduisant une fine lame métallique d'épaisseur au plus environ 1 mm dans l'interface entre, d'une part, le joint adhésif de colle réticulée et, d'autre part, l'objet ou le substrat. Selon la taille de l'objet, la rupture ainsi amorcée est poursuivie par de simples contraintes manuelles sur l'objet exercées par le particulier perpendiculairement au plan du substrat. L'amorçage de la rupture adhésive est rendu plus facile lorsque, conformément à un mode de réalisation préféré de la composition adhésive selon l'invention, celle-ci comprend en outre de 0,1 à 5% de granulats de caoutchouc de forme non sphérique ayant une taille comprise entre 0,5 et 2 mm, de préférence entre 0,8 et 1,2 mm.

L'amorçage de la rupture adhésive est encore facilitée pour la variante préférée du procédé de fixation selon l'invention selon laquelle le cordon de composition adhésive est placé sur la moitié supérieure de la surface plane de l'objet destinée à être au contact du substrat, au voisinage de la ligne de contact entre ladite surface et le substrat.

Les exemples suivants sont donnés à titre purement illustratif de l'invention et ne sauraient être interprétés pour en limiter la portée.

### Exemple 1 : Colle de fixation comprenant un polyéther à radical terminal alkoxysilane:

On utilise un polyéther à radical terminal alkoxysilane (A1) obtenu après de la société Kaneka sous la dénomination MS^{®} Polymer S303H, dénommé ci-après PolyEther (ou PE) silanisé.

La composition adhésive figurant dans le tableau suivant est préparée par simple mélange des ingrédients indiqués.

La pelabilité, la résistance à la traction et la résistance au cisaillement de la composition adhésive ainsi obtenue est évaluée, après réticulation, par les tests suivants.

### Test de pelabilité du joint adhésif :

Le principe de ce test consiste à obtenir un joint adhésif constitué de la composition adhésive réticulée et fixé sur un substrat, ledit joint ayant la forme d'un parallélépipède de 28 cm de long, de 2 cm de large et de 2 mm d'épaisseur. Ce joint est fixé par adhésion sur ledit substrat à l'exception de ses 2 extrémités laissées libres sur une longueur d'environ 2 cm chacune, de telle sorte que ces extrémités peuvent être aisément soulevées manuellement afin d'effectuer un pelage selon un angle d'environ 180°.

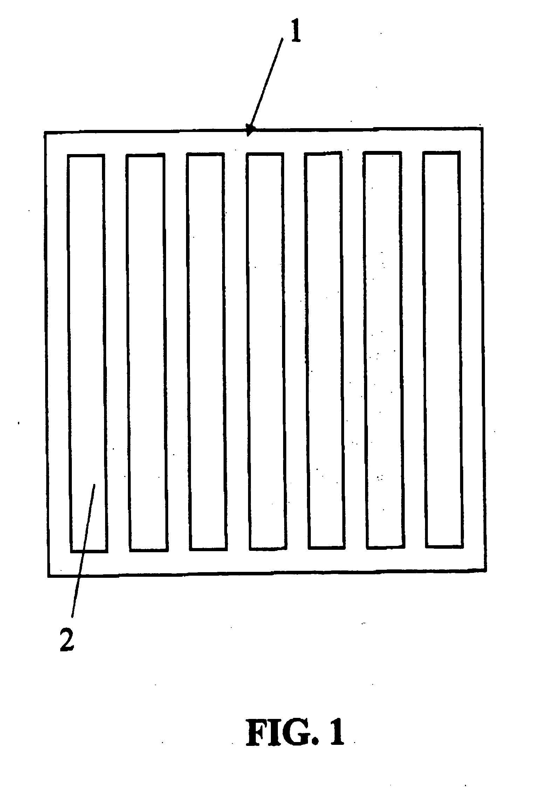

Pour ce faire, on utilise commodément l'appareillage suivant :
- une grille carrée 1 représentée sur la figure 1, ayant 30 cm de côté, comportant 7 évidements parallèles 2 ayant la forme et les dimensions du parallélépipède défini ci-dessus ;
- un carreau d'un substrat de 30 cm de côté, en un matériau qui est soit de la céramique, soit du fibrociment, soit du bois de chêne.

On dépose le long de 2 côtés opposés du carreau de substrat un ruban adhésif de 3 cm de large. La grille carrée est ensuite superposée sur le carreau de substrat, de telle sorte que les 2 rubans adhésifs soient perpendiculaires aux évidements 2, puis la grille est fixée au carreau de substrat au moyen d'un autre ruban adhésif.

On remplit alors un ou plusieurs évidements avec la ou les compositions adhésives à tester en éliminant les débordements éventuels avec une spatule.

On laisse reposer 7 jours à température et hygrométrie ambiante de manière à obtenir une réticulation complète de la composition adhésive sous l'action de l'humidité atmosphérique.

On sépare alors la grille du substrat : les joints de composition adhésive réticulée adhèrent au carreau de substrat, sauf sur les 2 extrémités laissées libres du fait de la protection du substrat par le ruban adhésif.

On procède alors au pelage manuel des éprouvettes de joint réticulé en s'aidant de leurs extrémités laissées libres.

Le comportement du joint au pelage est évalué visuellement par l' attribution d'une note allant de 1 à 4 :
4 = rupture à 100% adhésive du joint sur le substrat, c'est-à-dire que le joint réticulé peut être séparé en 1 seul morceau du substrat sans laisser aucun résidu sur ce dernier.
3 = rupture à 20 % cohésive et 80 % adhésive : le joint réticulé peut être séparé en 1 ou plusieurs morceaux, les résidus de joint occupant environ 20 % de la surface de la bande rectangulaire du substrat qui était au contact du joint,
2 = rupture à 80 % cohésive et 20 % adhésive : le joint réticulé peut être séparé en 1 ou plusieurs morceaux, environ 80 % de la surface de la bande rectangulaire qui était au contact du joint étant recouverte par des résidus.
1 = rupture à 100 % cohésive : au pelage, le joint casse et/ou on observe un résidu du joint sur la totalité de la surface de la bande.

Les notes obtenues sont indiquées dans le tableau suivant pour les 3 substrats testés.

### Test de résistance à la traction du joint adhésif (Norme NF ISO 37) ;

On mesure la contrainte de traction entraînant la rupture du joint adhésif.

Le principe de cette mesure consiste à étirer dans une machine de traction, dont la mâchoire mobile se déplace à vitesse constante, une éprouvette standard en forme d' haltère constituée de la composition adhésive réticulée et à enregistrer la contrainte appliquée au moment où se produit la rupture de l'éprouvette.

L'haltère utilisée est conforme au type 1 de la norme NF ISO 37.

Le résultat est indiqué en kg/cm² dans le tableau suivant.

### Test de résistance au cisaillement du joint adhésif (Norme ISO 4587) :

On mesure la contrainte de cisaillement entraînant la rupture du joint adhésif.

Le principe de cette mesure consiste à solliciter dans une machine de traction, dont la mâchoire mobile se déplace à vitesse constante, une éprouvette de forme standard constituée de la composition adhésive réticulée entre 2 supports rigides en bois, et à enregistrer la contrainte appliquée au moment où se produit la rupture de l'éprouvette.

On obtient un résultat d'environ 15 kg/cm².

### Exemples 2 à 6 : Colle de fixation comprenant un polyuréthane à radical terminal alkoxysilane (ou PU silanisé):

On répète l'exemple 1 en préparant les compositions figurant dans le tableau dans lesquelles le polymère (A2) est un polyuréthane à radical terminal alkoxysilane, dit PU silanisé.

Les notes de pelabilité et la contrainte de traction à la rupture, pour les joints de composition adhésive réticulée correspondante, sont également indiquées dans le tableau.

On obtient sensiblement le même résultat pour la résistance au cisaillement.

### Exemple 7 : Colle de fixation comprenant le polyuréthane à radical terminal alkoxysilane F :

### 1) Préparation du polyuréthane F de formule (II) dans laquelle :

- le bloc polyéther de formule -[OR⁴]ₙ- est tel que R⁴ est le radical isopropylène et a une masse molaire d'environ 8250 Da ;
- les 2 groupes terminaux de type alkoxysilane sont constitués par le radical triméthoxysilyl, et
- R⁵ est le radical n-propylène.

Dans un réacteur en verre sont introduits :
- 961,2 g (0,1165 mole) du poly(isopropoxy) diol ACCLAIM^{®} 8200,
- 12,99 g (0,0582 mole) d'isophorone diisocyanate (IPDI), ce qui correspond à un rapport des nombres de fonctions NCO/OH égal à 0,5 ; et:
- 120 ppm d'un catalyseur de type neodécanoate de bismuth et de zinc (disponible commercialement auprès de la société Borchers, sous la dénomination Borchi Kat VP 0244).

Ce mélange est maintenu sous agitation constante à 85°C et sous azote pendant 3 heures, jusqu'à réaction complète des fonctions NCO de l'IPDI.

Au polyuréthane à terminaisons hydroxyles ainsi obtenu sont ensuite ajoutés 24,6 g (0,1165 mole) de gamma-isocyanato-n-propyl-triméthoxysilane et le mélange est maintenu à 85°C jusqu'à disparition totale des fonctions NCO.

Le polyuréthane F obtenu a une viscosité de 55 Pa.s (mesurée au viscosimètre Brookfield à 23°C, avec une aiguille 7 tournant à raison de 20 tr/min), une masse molaire d'environ 20 kDa et un indice de polymolécularité d'environ 1,3.

### 2) Préparation de la colle de fixation correspondante :

On répète l'exemple 1 en préparant la composition figurant dans le tableau dans laquelle le polymère (A2) est le PU silanisé F.

Les notes de pelabilité et la contrainte de traction à la rupture, pour les joints de composition adhésive réticulée correspondante, sont également indiquées dans le tableau.

On obtient sensiblement le même résultat pour la résistance au cisaillement.

### Exemple 8 : Colle de fixation comprenant le polyuréthane à radical terminal alkoxysilane F :

On répète l'exemple 7 avec la teneur indiquée pour le PU silanisé F.

On obtient les résultats de pelabilité et de résistance à la traction indiqués dans le tableau et sensiblement le même résultat pour la résistance au cisaillement.

### Exemples 9 et 10 : Colle de fixation comprenant un PU silanisé et des granulats de caoutchouc ;

On répète un des exemples 2 à 6 avec la teneur en PU silanisé indiquée dans le tableau et en incorporant également des granulats de caoutchoucs de forme non sphérique ayant une taille comprise entre 0,8 et 1,2 mm, avec une teneur desdits granulats également indiquée dans le tableau.

On obtient les résultats de pelabilité et de résistance à la traction indiqués dans le tableau et sensiblement le même résultat pour la résistance au cisaillement.

La pelabilité des compositions adhésives des exemples 1 à 10 fait apparaître un comportement caractéristique d'une rupture adhésive.

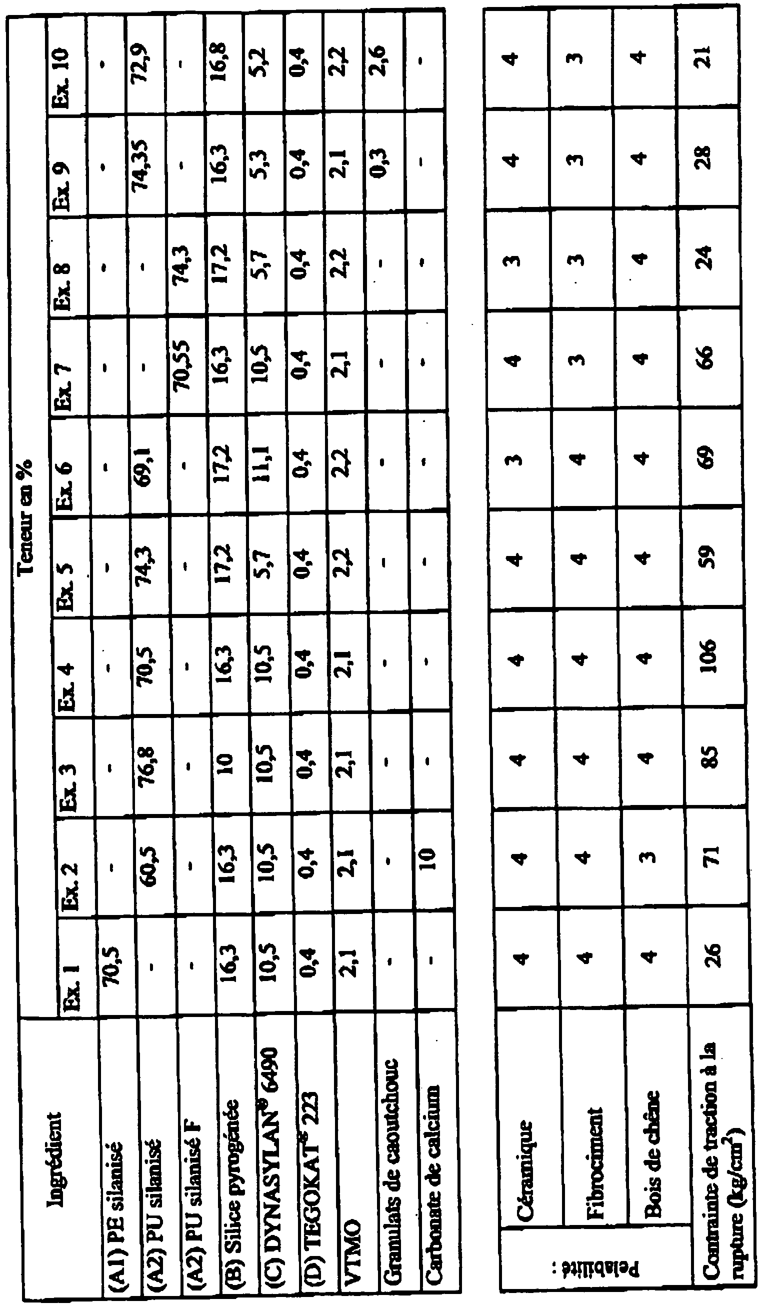

## Revendications

1. Composition adhésive comprenant:
- de 58 à 80 % d'un polymère (A) à radical terminal alkoxysilane réticulable à l'humidité ;
- de 8 à 20 % d'une silice (B) ayant une surface spécifique BET comprise entre 150 et 250 m²/g;
- de 4 à 15 % d'un oligomère (C) de masse molaire comprise entre 500 et 5000 Da et susceptible d'être obtenu par oligomérisation d'un dérivé vinylique d'un alkoxy alkyl silane ; et
- de 0,01 à 3 % d'un catalyseur de réticulation (D).

2. Composition adhésive selon la revendication 1, **caractérisée en ce que** la chaîne principale du polymère (A) est choisie parmi les chaînes polymériques suivantes :
- (A1) les polyoxyalkylènes (ou polyéthers) de masse molaire comprise entre 500 et 30 000 Da, ;
- (A2) les polyuréthanes de masse molaire comprise entre 600 Da et 60 kDa, et obtenus par condensation d'un polyol avec des polyisocyanates ;
- (A3) les homopolymères et copolymères de masse molaire comprise entre 5 et 100 kDa, obtenus à partir d'au moins un monomère de type alkyl (méth)acrylate comprenant un radical alkyle ayant un nombre d'atomes de carbone compris entre 1 et 15.

3. Composition adhésive selon l'une des revendications 1 ou 2, **caractérisée en ce que** la chaîne principale du polymère (A) est choisie parmi les polyoxyéthylenes et les polyuxypropylènes.

4. Composition adhésive selon l'une des revendications 1 à 3, **caractérisée en ce que** le radical terminal alkoxysilane a pour formule (I):
- Si (R¹)ₚ(OR²)₃₋ₚ
dans laquelle :
- R¹ et R², identiques ou différents, représentent chacun un radical alkyle linéaire ou ramifié de 1 à 4 atomes de carbone, avec la possibilité lorsqu'il y a plusieurs radicaux R¹ (ou R²) que ceux-ci soient identiques ou différents ;
- p est un nombre entier égal à 0, 1 ou 2 ;
et ledit radical alkoxysilane est relié à la chaîne principale directement par sa liaison disponible ou indirectement, notamment par l'intermédiaire d'un radical hydrocarboné divalent, de préférence par un radical alkylène.

5. Composition adhésive selon l'une des revendications 1, 2 ou 4, **caractérisée en ce que** le polymère (A) a pour formule (U) : 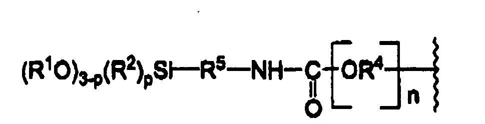 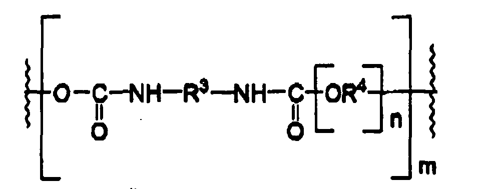 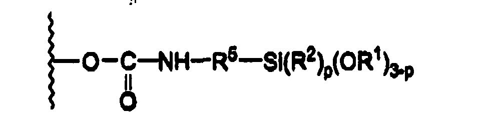 dans laquelle :
- R¹ et R² sont tels que définis précédemment;
- R³ représente un radical divalent hydrocarboné comprenant de 5 à 15 atomes de carbone qui peut être aromatique ou aliphatique, linéaire, ramifié ou cyclique ;
- R⁴ représente un radical divalent alkylène linéaire ou ramifié comprenant de 1 à 4 atomes de carbone ;
- R⁵ représente un radical divalent alkylène linéaire comprenant de 1 à 3 atomes de carbone ;
- n est un nombre entier tel que la masse molaire du bloc polyéther de formule -[OR⁴]ₙ- est comprise entre 300 Da et 30 kDa ;
- m est un nombre entier tel que la masse molaire du polymère de formule (II) est comprise entre 600 Da et 60 kDa ;
- p est tel que défini précédemment.

6. Composition adhésive selon l'une des revendications 1 à 5, **caractérisée en ce qu'**elle comprend de 60 à 77 % de polymère (A), de 10 à 18 % de silice pyrogénée (B), de 5 à 12 % de l'oligomère (C), et de 0,1 à 2 % de catalyseur (D).

7. Composition adhésive selon l'une des revendications 1 à 6, **caractérisée en ce qu'**elle comprend en outre jusqu'à 3 % d'un dérivé alkoxysilane hydrolysable, en tant qu'agent dessicant.

8. Composition adhésive selon l'une des revendications 1 à 7, **caractérisée en ce qu'**elle comprend en outre de 0,1 à % de granulats de caoutchouc de forme non sphérique ayant une taille comprise entre 0,5 et 2 mm, de préférence entre 0,8 et 1,2 mm.

9. Procédé de fixation d'un objet sur un substrat compris dans les sols, parois verticales et/ou plafonds des habitations, comprenant :
i) le dépôt de la composition adhésive telle que définie dans l'une des revendications 1 à 8 sous la forme d'un cordon ayant un diamètre de 2 à 10 mm, de préférence de 4 à 10 mm, sur les surfaces de l'objet ou du substrat destinées à être en contact,
ii) l'application par simple pression manuelle de l'objet sur le substrat, puis
iii) la réticulation de ladite composition adhésive sous l'effet de l'humidité atmosphérique durant un temps compris entre 1 heure et 48 heures, de préférence entre 4 heures et 24 heures.

10. Procédé selon la revendication 9, **caractérisé en ce que** le substrat est compris dans une paroi verticale et **en ce que** le cordon de composition adhésive est déposé sur la surface plane de l'objet destinée à être mise en contact avec le substrat.

11. Procédé selon la revendication 10, **caractérisé en ce que** le poids de l'objet à fixer correspond à une contrainte de cisaillement exercée sur le joint constitué de la composition adhésive réticulée, allant de 3 à 20 kg/cm².

12. Procédé selon l'une des revendications 9 à 11, **caractérisé en ce que** l'objet à fixer est utilisable à des fins d'aménagement ou de décoration des habitations.

13. Procédé selon l'une des revendications 10 à 12, **caractérisé en ce que** le cordon de composition adhésive est placé sur la moitié supérieure de la surface plane de l'objet destinée à être au contact du substrat, au voisinage de la ligne de contact entre ladite surface et le substrat.

14. Procédé de séparation de l'objet fixé à un substrat conformément au procédé défini dans l'une des revendications 9 à 13, comprenant la mise en oeuvre d'une rupture adhésive.

## Claims

1. Adhesive composition comprising:
- from 58 to 80% of a moisture-crosslinkable polymer (A) having an alkoxysilane terminal radical;
- from 8 to 20% of a silica (B) having a BET specific surface area between 150 and 250 m²/g;
- from 4 to 15% of an oligomer (C) having a molecular weight between 500 and 5000 Da and that is capable of being obtained by oligomerization of a vinyl derivative of an alkoxyalkylsilane; and
- from 0.01 to 3% of a crosslinking catalyst (D).

2. Adhesive composition according to Claim 1, **characterized in that** the main chain of the polymer (A) is chosen from the following polymer chains:
- (A1) polyoxyalkylenes (or polyethers) having a molecular weight between 500 and 30 000 Da;
- (A2) polyurethanes having a molecular weight between 600 Da and 60 kDa, obtained by condensation of a polyol with polyisocyanates;
- (A3) homopolymers and copolymers having a molecular weight between 5 and 100 kDa, obtained from at least one monomer of alkyl (meth)acrylate type comprising an alkyl radical having a number of carbon atoms between 1 and 15.

3. Adhesive composition according to either of Claims 1 and 2, **characterized in that** the main chain of the polymer (A) is chosen from polyoxyethylenes and polyoxypropylenes.

4. Adhesive composition according to one of Claims 1 to 3, **characterized in that** the alkoxysilane terminal radical has the formula (I):
-S₁(R¹)ₚ(OR²)₃₋ₚ
in which:
- R¹ and R², which are identical or different, each represent a linear or branched alkyl radical having 1 to 4 carbon atoms, with the possibility, when there are several R¹ (or R²) radicals, that these are identical or different;
- p is an integer equal to 0, 1 or 2;
and said alkoxysilane radical is connected to the main chain directly by its available bond or indirectly, especially via a divalent hydrocarbon-based radical, preferably by an alkylene radical.

5. Adhesive composition according to one of Claims 1, 2 or 4, **characterized in that** the polymer (A) has the formula (II): 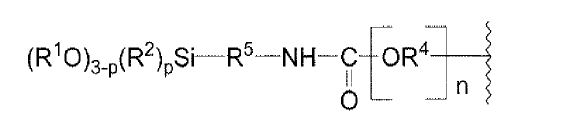 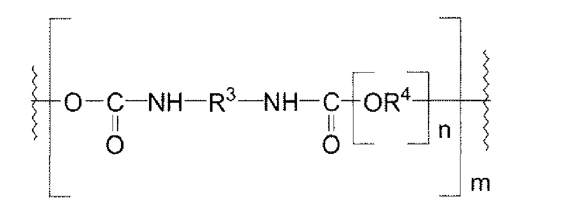 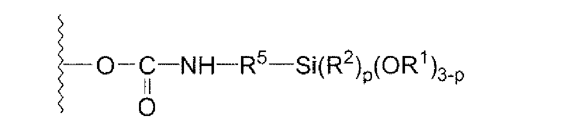 in which:
- R¹ and R² are as defined previously;
- R³ represents a hydrocarbon-based divalent radical comprising from 5 to 15 carbon atoms which may be aromatic or aliphatic, linear, branched or cyclic;
- R⁴ represents a linear or branched alkylene divalent radical comprising from 1 to 4 carbon atoms;
- R⁵ represents a linear alkylene divalent radical comprising from 1 to 3 carbon atoms;
- n is an integer such that the molecular weight of the polyether block of formula - [OR⁴]ₙ- is between 300 Da and 30 kDa;
- m is an integer such that the molecular weight of the polymer of formula (II) is between 600 Da and 60 kDa; and
- p is as defined previously.

6. Adhesive composition according to one of Claims 1 to 5, **characterized in that** it comprises from 60 to 77% of polymer (A), from 10 to 18% of pyrogenic silica (B), from 5 to 12% of oligomer (C) and from 0.1 to 2% of catalyst (D).

7. Adhesive composition according to one of Claims 1 to 6, **characterized in that** it comprises, in addition, up to 3% of a hydrolysable alkoxysilane derivative, as a desiccant.

8. Adhesive composition according to one of Claims 1 to 7, **characterized in that** it comprises, in addition, from 0.1 to 5% of rubber granulates of non-spherical shape having a size between 0.5 and 2 mm, preferably between 0.8 and 1.2 mm.

9. Method for fastening an article to a substrate included in the floors, vertical surfaces and/or ceilings of dwellings, comprising:
i) the deposition of the adhesive composition as defined in one of Claims 1 to 8 in the form of a bead having a diameter of 2 to 10 mm, preferably from 4 to 10 mm, onto the surfaces of the article or of the substrate intended to be in contact;
ii) the application, by simple manual pressure, of the article to the substrate; then
iii) the crosslinking of said adhesive composition under the effect of atmospheric moisture over a time between 1 hour and 48 hours, preferably between 4 hours and 24 hours.

10. Method according to Claim 9, **characterized in that** the substrate is included in a vertical surface and **in that** the bead of adhesive composition is deposited on the planar surface of the article intended to be brought into contact with the substrate.

11. Method according to Claim 10, **characterized in that** the weight of the article to be fastened corresponds to a shear stress exerted on the joint constituted of the crosslinked adhesive composition, ranging from 3 to 20 kg/cm².

12. Method according to one of Claims 9 to 11, **characterized in that** the article to be fastened can be used for the purposes of fitting out or decorating dwellings.

13. Method according to one of Claims 10 to 12, **characterized in that** the bead of adhesive composition is placed on the upper half of the planar surface of the article intended to be in contact with the substrate, in the vicinity of the line of contact between said surface and the substrate.

14. Method for separating the article attached to a substrate in accordance with the method defined in one of Claims 9 to 13, comprising the implementation of an adhesive failure.

## Patentansprüche

1. Klebstoffzusammensetzung, umfassend:
- 58 bis 80% eines feuchtigkeitsvernetzbaren Polymers (A) mit einem endständigen Alkoxysilanrest;
- 8 bis 20% einer Kieselsäure (B) mit einer spezifischen BET-Oberfläche zwischen 150 und 250 m²/g;
- 4 bis 15% eines Oligomers (C), das eine Molmasse zwischen 500 und 5000 Da aufweist und durch Oligomerisation eines Vinylderivats eines Alkoxyalkylsilans erhältlich ist,
- 0,01 bis 3% eines Vernetzungskatalysators (D).

2. Klebstoffzusammensetzung nach Anspruch 1, **dadurch gekennzeichnet, dass** die Hauptkette des Polymers (A) aus den folgenden Polymerketten ausgewählt ist:
- (A1) Polyoxyalkylenen (oder Polyethern) mit einer Molmasse zwischen 500 und 30.000 Da;
- (A2) Polyurethanen mit einer Molmasse zwischen 600 Da und 60 kDa, erhalten durch Kondensation eines Polyols mit Polyisocyanaten;
- (A3) Homopolymeren und Copolymeren mit einer Molmasse zwischen 5 und 100 kDa, erhalten aus mindestens einem Monomer vom Alkyl(meth)-acrylat-Typ mit einem Alkylrest mit 1 bis 15 Kohlenstoffatomen.

3. Klebstoffzusammensetzung nach einem der Ansprüche 1 oder 2, **dadurch gekennzeichnet, dass** die Hauptkette des Polymers (A) aus Polyoxyethylenen und Polyoxypropylenen ausgewählt ist.

4. Klebstoffzusammensetzung nach einem der Ansprüche 1 bis 3, **dadurch gekennzeichnet, dass** der endständige Alkoxysilanrest die Formel (I) aufweist:
-S₁(R¹)ₚ(OR²)₃₋ₚ
worin:
- R¹ und R² gleich oder verschieden sind und jeweils für einen linearen oder verzweigten Alkylrest mit 1 bis 4 Kohlenstoffatomen steht, wobei dann, wenn mehrere Reste R¹ (oder R²) vorliegen, diese Reste gleich oder verschieden sein können;
- p für eine ganze Zahl mit einem Wert von 0, 1 oder 2 steht;
wobei der Alkoxysilanrest direkt über seine verfügbare Bindung oder indirekt, insbesondere über einen zweiwertigen Kohlenwasserstoffrest, vorzugsweise einen Alkylenrest, an die Hauptkette gebunden ist.

5. Klebstoffzusammensetzung nach einem der Ansprüche 1, 2 oder 4, **dadurch gekennzeichnet, dass** das Polymer (A) die Formel (II) aufweist: 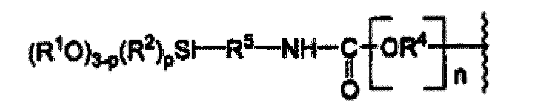 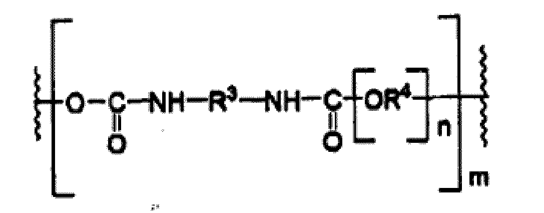 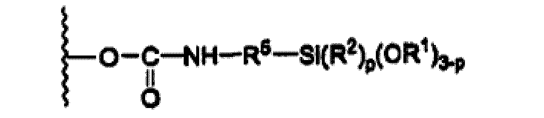 worin:
- R¹ und R² wie oben definiert sind;
- R³ für einen zweiwertigen Kohlenwasserstoffrest mit 5 bis 15 Kohlenstoffatomen, der aromatisch oder aliphatisch, linear, verzweigt oder cyclisch sein kann, steht;
- R⁴ für einen linearen oder verzweigten zweiwertigen Alkylenrest mit 1 bis 4 Kohlenstoffatomen steht;
- R⁵ für einen linearen zweiwertigen Alkylenrest mit 1 bis 3 Kohlenstoffatomen steht;
- n für eine solche ganze Zahl steht, dass die Molmasse des Polyetherblocks der Formel -[OR⁴]ₙ-zwischen 300 Da und 30 kDa liegt;
- m für eine solche ganze Zahl steht, dass die Molmasse des Polymers der Formel (II) zwischen 600 Da und 60 kDa liegt;
- p wie oben definiert ist.

6. Klebstoffzusammensetzung nach einem der Ansprüche 1 bis 5, **dadurch gekennzeichnet, dass** sie 60 bis 77% Polymer (A), 10 bis 18% pyrogen hergestellte Kieselsäure (B), 5 bis 12% Oligomer (C) und 0,1 bis 2% Katalysator (D) umfasst.

7. Klebstoffzusammensetzung nach einem der Ansprüche 1 bis 6, **dadurch gekennzeichnet, dass** sie außerdem bis zu 3% eines hydrolysierbaren Alkoxysilanderivats als Trockenmittel umfasst.

8. Klebstoffzusammensetzung nach einem der Ansprüche 1 bis 7, **dadurch gekennzeichnet, dass** sie außerdem 0,1 bis 5% Kautschukgranulat in nichtsphärischer Form mit einer Größe zwischen 0,5 und 2 mm, vorzugsweise zwischen 0,8 und 1,2 mm, umfasst.

9. Verfahren zum Befestigen eines Gegenstands an einem in den Böden, vertikalen Wänden und/oder Decken von Wohnungen enthaltenen Substrat, umfassend:
i) Aufbringen der Klebstoffzusammensetzung gemäß einem der Ansprüche 1 bis 8 in Form einer Raupe mit einem Durchmesser von 2 bis 10 mm, vorzugsweise 4 bis 10 mm, auf die für den Kontakt vorgesehenen Oberflächen des Gegenstands oder des Substrats,
ii) Aufbringen des Gegenstands durch einfachen manuellen Druck auf das Substrat, dann
iii) Vernetzen der Klebstoffzusammensetzung unter der Einwirkung von Luftfeuchtigkeit über einen Zeitraum zwischen 1 Stunde und 48 Stunden, vorzugsweise zwischen 4 Stunden und 24 Stunden.

10. Verfahren nach Anspruch 9, **dadurch gekennzeichnet, dass** das Substrat in einer vertikalen Wand enthalten ist und die Raupe aus der Klebstoffzusammensetzung auf der für den Kontakt mit dem Substrat bestimmten ebenen Oberfläche des Gegenstands aufgebracht wird.

11. Verfahren nach Anspruch 10, **dadurch gekennzeichnet, dass** das Gewicht des zu befestigenden Gegenstands auf die aus der vernetzten Klebstoffzusammensetzung bestehende Verbindung eine Scherspannung im Bereich von 3 bis 20 kg/cm² ausübt.

12. Verfahren nach einem der Ansprüche 9 bis 11, **dadurch gekennzeichnet, dass** der zu befestigende Gegenstand zur Ausstattung oder Dekoration von Wohnungen verwendbar ist.

13. Verfahren nach einem der Ansprüche 10 bis 12, **dadurch gekennzeichnet, dass** die Raupe aus der Klebstoffzusammensetzung auf der oberen Hälfte der für den Kontakt mit dem Substrat bestimmten ebenen Oberfläche des Gegenstands in der Nähe der Kontaktlinie zwischen der Oberfläche und dem Substrat angeordnet wird.

14. Verfahren zum Ablösen des gemäß dem Verfahren nach einem der Ansprüche 9 bis 13 an einem Substrat befestigten Gegenstands mit Realisierung von adhäsivem Versagen.
